# NEUE EUROPÄISCHE PATENTSCHRIFT

(11) **EP 1 488 989 B2**
(45) Veröffentlichungstag und Bekanntmachung des Hinweises auf die Entscheidung über den Einspruch: **25.04.2018**
(45) Hinweis auf die Patenterteilung: 05.01.2011
(21) Anmeldenummer: 04013475.1
(22) Anmeldetag: 08.06.2004
(51) Int. Cl.: B62D 33/037, E05B 65/16

(54) **Drehstangenverschluss für Türen, Klappen oder dgl. von Nutzfahrzeugaufbauten**
Rotary bar latching means for doors, flaps or similar of utility vehicle bodies
Fermeture à barre rotative pour portes, ridelles ou semblables de superstuctures de véhicules utilitaires

(30) Priorität: 16.06.2003 DE 20309265 U
(43) Veröffentlichungstag der Anmeldung: 22.12.2004
(73) Patentinhaber: F. HESTERBERG & SÖHNE GmbH & Co. KG, 58256 Ennepetal (DE)
(72) Erfinder: Krüger, Friedrich, 58256 Ennepetal (DE)
(74) Vertreter: Christophersen, Ruth

(56) Entgegenhaltungen:
- DE-U1- 9 419 874
- DE-U1- 20 012 724
- US-A- 1 952 112
- US-A- 2 380 302
- US-A- 2 751 860
- US-A- 5 046 770
- US-B1- 2 568 058
- Extract of catalog of company Alu-West
- BOVENKERK K. ET AL: 'Fachkunde Metall', Bd. 48. AUFL, 1987, VERLAG EUROPA-LEHRMITTEL, HAAN Seiten 352 - 359

## Beschreibung

Die Erfindung betrifft eine Drehstangenverschluß für Türen, Klappen oder dgl. von Nutzfahrzeugaufbauten, mit einer um ihre Längsachse drehbaren Drehstange, einem mit der Drehstange drehfest verbundenen Verriegelungsteil, das einen Grundkörper und einen vom Grundkörper abstehenden Spannzapfen aufweist, der sich im wesentlichen in einer quer zur Längsrichtung der Drehstange verlaufenden Richtung erstreckt, einem an einem festen Teil des Nutzfahrzeugaufbaus befestigbaren Gegenhalter, mit dem der Spannzapfen in Eingriff bringbar ist, und einem mit der Drehstange drehfest verbundenen Schwenkhebel, der sich im wesentlichen quer zur Längsrichtung der Drehstange in einer zu der Erstreckungsrichtung des Spannzapfens entgegengesetzten Richtung erstreckt, wobei das Verriegelungsteil durch eine Formschlußverbindung mit der Drehstange drehfest verbunden ist.

Ein solcher Drehstangenverschluß ist aus der gattungsgemäßen US-A-2380302 bekannt. Bei diesem Drehstangenverschluß ist die drehfeste Verbindung zwischen der Drehstange und dem Verriegelungsteil durch formschlüssiges Ineinandergreifen eines gabelförmigen Endes des Verriegelungsteiles und eines Endes der einen unrunden Querschnitt aufweisenden Drehstange verwirklicht. Ferner ist der Schwenkhebel ein von dem Verriegelungsteil separates Bauteil, das, bezogen auf die Längsrichtung der Drehstange, im Abstand von dem Verriegelungsteil an der Drehstange drehfest befestigt ist. Der US-A-2380302 kann nicht entnommen werden, wie die drehfeste Verbindung zwischen dem Schwenkhebel und der Drehstange verwirklicht ist. Insbesondere kann der US-A-2380302 nicht entnommen werden, ob die drehfeste Verbindung zwischen dem Schwenkhebel und der Drehstange durch eine Formschluß- und/oder eine Reibschluß- oder eine Schweißverbindung hergestellt ist.

Ferner ist ein Drehstangenverschluß aus der US-A-2751860 bekannt. Bei diesem Drehstangenverschluß sind das Verriegelungsteil und der Schwenkhebel zwei voneinander getrennte Bauteile, von denen der Schwenkhebel, bezogen auf die Längsrichtung der Drehstange im Abstand von dem Verriegelungsteil an der Drehstange befestigt ist, derart, dass die Drehstange und der Schwenkhebel drehfest miteinander verbunden sind. Auch das Verriegelungsteil ist drehfest mit der Drehstange verbunden. Ein von einem Grundkörper des Verriegelungsteiles abstehender Spannzapfen erstreckt sich im wesentlichen in einer schräg zu der Längsrichtung des Schwenkhebel verlaufenden Richtung. Sowohl das Verriegelungsteil als auch der Schwenkhebel ist durch einen Formschluß drehfest mit der Drehstange verbunden, wobei der Formschluß zwischen dem Schwenkhebel und der Drehstange durch Ineinandergreifen eines gabelförmigen Endes des Schwenkhebels und eines Abschnittes der im Querschnitt durchgehend rechteckigen Drehstange verwirklicht ist. Der Formschluß zwischen dem Verriegelungsteil und der Drehstange ist durch Ineinandergreifen eines gabelförmigen Endes des Verriegelungsteiles und eines Endes der im Querschnitt durchgehend rechteckigen Drehstange verwirklicht. Der Schwenkhebel wird an der Drehstange in deren Längsrichtung unverschieblich durch einen Niet gehalten, dessen Schaft durch axial fluchtende Bohrungen im gabelförmigen Ende des Schwenkhebels und der Drehstange geführt ist. Das Verriegelungsteil wird an der Drehstange in deren Längsrichtung unverschieblich durch zwei Nieten gehalten, deren Schäfte jeweils durch axial fluchtende Bohrungen im gabelförmigen Ende des Verriegelungsteiles und der Drehstange gehen.

Ein Drehstangenverschluß der eingangs beschriebenen Art ist aus auch der US-A-1952112 bekannt. Bei diesem Drehstangenverschluß ist der Schwenkhebel um eine senkrecht zu der Längsrichtung der Drehstange verlaufenden Achse schwenkbar mit dem Grundkörper des Verriegelungsteiles verbunden. Der Schwenkhebel ist aus einer Außerbetriebsstellung in eine Betriebsstellung schwenkbar, in der er vom Grundkörper in einer Richtung absteht, die entgegengesetzt zu der Richtung ist, in der der Spannzapfen vom Verriegelungsteil absteht, wobei aber der Schwenkhebel und der Spannzapfen in voneinander beabstandeten Ebenen liegen, die sich jeweils senkrecht zu der Längsrichtung der Drehstange erstrecken. Sowohl der Schwenkhebel als auch das Verriegelungsteil sind formschlüssig mit der Drehstange verbunden, wobei der Formschluß zwischen dem Schwenkhebel und der Drehstange durch Ineinandergreifen eines gabelförmigen Endes des Schwenkhebels und der im Querschnitt durchgehend rechteckig ausgebildeten Drehstange verwirklicht ist, und der Formschluß zwischen dem Verriegelungsteil und der Drehstange durch Eingriff eines Endes der Drehstange in einen einen entsprechenden passgenauen rechteckigen Querschnitt aufweisenden Hohlraum im Grundkörper des Verriegelungsteiles verwirklicht ist.

Außerdem ist ein Drehstangenverschluß aus der US-A-5046770 bekannt. Bei diesem Drehstangenverschluß sind der Schwenkhebel und das Verriegelungsteil zwei getrennte Bauteile, die in zwei voneinander beabstandeten Ebenen liegen, die sich jeweils senkrecht zu der Längsrichtung der Drehstange erstrecken. Der Schwenkhebel ist mit der Drehstange drehfest durch einen Formschluß verbunden, der unter Verwendung eines zylindrischen Stiftes, der die als zylindrisches Rohr ausgebildete Drehstange und einen das Rohr umgebenden hülsenförmigen Abschnitt des Schwenkhebels diametral durchdringt, gebildet ist. Das Verriegelungsteil ist mit der Drehstange drehfest durch einen Formschluß verbunden, der unter Verwendung eines zylindrischen Stiftes, der ein gegabeltes Ende der Drehstange und einen das gegabelte Ende umgebenden hülsenförmigen Abschnitt des Verriegelungsteiles diametral durchdringt, gebildet ist. Anstelle eines Stiftes, der das Verriegelungsteil und die Drehstange formschlüssig miteinander verbindet kann auch eine Rippe verwendet werden, die an dem Verriegelungsteil angeformt ist und in das gabelförmige Ende der Drehstange eingreift. Als weitere Alternative ist eine formschlüssige Steckverbindung zwischen dem Verriegelungsteil und der Drehstange vorgesehen, wobei die ineinander zu steckenden Teile unrunde Querschnitte haben.

Ferner ist ein Drehstangenverschluß aus der EP-A-0953496 bekannt. Bei diesem bekannten Drehstangenverschluß ist die Drehstange, die aus einer massiven Stange oder einem Rohr bestehen kann, an der Tür, Klappe oder dgl. drehbar lagerbar und mit dem Verriegelungsteil durch Schweißen fest verbunden. Dazu wird die Drehstange durch eine Bohrung des Verriegelungsteiles gesteckt und an beiden Enden der Bohrung mit dem Verriegelungsteil verschweißt. Das Verriegelungsteil und der Schwenkhebel sind zwei eigenständige Bauteile, die durch einen Niet fest miteinander verbunden sind. Der von einem Grundkörper des Verriegelungsteiles abstehende Spannzapfen und der Schwenkhebel erstrecken sich in entgegengesetzte Richtungen und liegen in einer gemeinsamen, von der Drehstange senkrecht durchsetzten Ebene.

Aus der Praxis ist auch bekannt, dass das Verriegelungsteil eines Drehstangenverschlusses mit einer muldenförmigen Ausnehmung anstelle einer Bohrung versehen ist, und die Drehstange in die Ausnehmung eingelegt und entlang von parallel zu der Drehstange verlaufenden Rändern der Ausnehmung mit dem Verriegelungsteil verschweißt ist. Die Bauteile des Drehstangenverschlusses werden meistens vor der Montage mit einem Korrosionsschutzmittel an ihrer Oberfläche versehen. Ferner werden die Drehstange und das oder die Verriegelungsteile in der Regel erst bei der Montage des Verschlusses miteinander verschweißt. Durch die Schweißung wird der Korrosionsschutz an den Schweißstellen zerstört. Außerdem kann durch die Schweißung die Oberfläche der Tür oder der Klappe oder des festen Teiles, an das der oder die Gegenhalter des Drehstangenverschlusses montiert wird bzw. werden, beschädigt. Man kann zwar anschließend auf die beschädigten Stellen Farbe auftragen, der damit erreichte Korrosionsschutz ist jedoch geringer als an den von der Schweißung unbeeinträchtigten Stellen des Drehstangenverschlusses oder der Tür oder der Klappe odes des festen Teiles des Nutzfahrzeugaufbaus. Das Erzeugen einer drehfesten Verbindung zwischen der Drehstange und dem oder den Verriegelungsteilen mittels Schweißung ist außerdem zeitaufwändig.

Die Aufgabe der Erfindung besteht darin, den gattungsgemäßen Drehstangenverschluß so weiterzubilden, dass eine drehfeste Verbindung zwischen der Drehstange und dem Verriegelungsteil einerseits und dem Schwenkhebel andererseits einfacher und schneller als bisher und ohne Beschädigung des Oberflächenschutzes von Bauteilen des Drehstangenverschlusses und/oder der Tür oder der Klappe oder des festen Teiles des Nutzfahrzeugaufbaus erzeugt werden kann.

Die Aufgabe der Erfindung wird durch die Merkmale des Anspruchs 1 gelöst.

Eine derartige Verbindungsart ermöglicht eine schnelle und korrosionssichere Montage des Drehstangenverschlusses ohne Verletzung des zuvor auf die Bauteile des Drehstangenverschlusses und/oder die Tür, die Klappe oder das feste Teil des Nutzfahrzeugaufbaus aufgebrachten Oberflächenschutzes. Da bei dieser Verbindungsart der Oberflächenschutz der genannten Teile nicht beschädigt wird, entfällt auch der bisher nach der Montage des Drehstangenverschlusses durchgeführte Farbauftrag zur Wiederherstellung des Oberflächenschutzes.

Die Formschlußverbindung ist eine Nietverbindung, die wie folgt gestaltet sein kann: Der Grundkorper des mit dem Schwenkhebel einstückig verbundenen Verriegelungsteiles oder auch eines weiteren Verriegelungsteiles weist eine zylindrische Hauptbohrung auf, in der ein zylindrischer Abschnitt der Drehstange koaxial aufgenommen ist. Mindestens ein Paar diametral sich gegenüberliegender, im wesentlichen senkrecht zu der Hauptbohrung des Grundkörpers verlaufender, axial fluchtender Nietbohrungen sind im Grundkörper zwischen den beiden Enden der Hauptbohrung vorgesehen. Ferner ist mindestens eine zu dem mindestens einen Nietbohrungspaar des oder jeden Verriegelungsteiles axial fluchtende Nietbohrung im zylindrischen Abschnitt der Drehstange vorgesehen. Der Schaft eines Niets ist durch die Nietbohrungen des mindestens einen Nietbohrungspaares des oder jeden Verriegelungsteiles und der Drehstange hindurchgeführt.

Die Dauerfestigkeit der Nietverbindung wird weiter erhöht, indem eine zylindrische Hülse in den jeweils axial fluchtenden Nietbohrungen des oder jedes Verriegelungsteiles und der Drehstange koaxial angeordnet ist und der Schaft eines Niets koaxial durch die Bohrung der jeweiligen Hülse verläuft. Die Hülse besteht aus hochfestem Federstahl. Infolgedessen kann ein exakter Festsitz des Nietschaftes in der jeweiligen Bohrung·erzeugt werden.

Vorzugsweise ist wenigstens eine an der Tür oder Klappe oder dergleichen befestigbare Lagerplatte vorgesehen, die ein rundes Fenster hat, durch das ein zylindrischer Abschnitt der Drehstange hindurchragt, um die Drehstange drehbar an der Tür, Klappe oder dergleichen zu lagern. Um die Drehstange und das oder die Verriegelungsteile, die drehfest mit der Drehstange verbunden sind, in Axialrichtung der Drehstange im wesentlichen unverschieblich relativ zu der Tür oder der Klappe zu machen, kann ein die Drehstange koaxial umgebender Distanzring zwischen der oder jeder Lagerplatte und dem jeweiligen Verriegelungsteil vorgesehen sein.

Eine drehfeste Verbindung zwischen der Drehstange und dem weiteren Verriegelungsteil kann auch durch einen Reibschluß anstelle eines Formschlusses oder zusätzlich zu einem Formschluß oder auch durch einen vorgespannten Formschluß erreicht werden.

Eine zumindest reibschlüssige Verbindung zwischen der Drehstange und dem weiteren Verriegelungsteil kann z.B. erreicht werden, wenn das weitere Verriegelungsteil ein Durchgangsloch und einen zwischen dem Durchgangsloch und der Außenseite des weiteren Verriegelungsteiles sich erstreckenden Schlitz hat, der von zwei das Durchgangsloch umgebenden biegeelastisch miteinander verbundenen Abschnitten des weiteren Verriegelungsteiles begrenzt wird, und wenn ein Abschnitt der Drehstange in dem Durchgangsloch aufgenommen und durch eine von den beiden Abschnitten des weiteren Verriegelungsteiles ausgeübte Klemmkraft verdrehsicher gehalten wird, die durch Verspannen der beiden Abschnitte des weiteren Verriegelungsteiles mittels einer Schrauben- oder Nietverbindung erzeugt wird.

Werden bei einem derartigen Drehstangenverschluß der Querschnitt des Durchgangsloches in dem weiteren Verriegelungsteil und der Querschnitt des in ihm aufgenommenen Drehstangenabschnittes jeweils mehreckig ausgeführt, sind die Drehstange und das weiteren Verriegelungsteil form- und reibschlüssig miteinander verbunden.

Um die Dauerfestigkeit der Verbindung zwischen der Drehstange und dem weiteren Verriegelungsteil sowohl in Drehrichtung als auch in Längsrichtung der Drehstange zu erhöhen, ist es von Vorteil, wenn die Schrauben- oder Nietverbindung mindestens eine Schraube bzw. einen Niet aufweist, deren bzw. dessen Schaft durch eine Ausnehmung in der Oberfläche des in dem Durchgangsloch des weiteren Verriegelungsteiles aufgenommenen Abschnittes der Drehstange verläuft, derart, daß durch Anlage des Schrauben- bzw. Nietschaftes an der Wand der Ausnehmung das weiteren Verriegelungsteil und die Drehstange in deren Längsrichtung relativ zueinander unverschieblich sind.

Die Montage des Drehstangenverschlusses kann noch mehr erleichtert oder beschleunigt werden, wenn die drehfeste Verbindung zwischen der Drehstange und dem weiteren Verriegelungsteil aus einer Steckverbindung besteht, die aus zwei zusammengesteckten, jeweils einen unrunden Querschnitt aufweisenden Steckverbindungsteilen des weiteren Verriegelungsteiles und der Drehstange gebildet ist. Die Steckverbindung erzeugt einen Formschluß zwischen dem weiteren Verriegelungsteil und der Drehstange und kann zweckmäßigerweise wie folgt ausgeführt sein:

Der Steckverbindungsteil des weiteren Verriegelungsteils ist ein von dessen Grundkörper abstehender Verbindungszapfen, der sich in Längsrichtung der Drehstange erstreckt und einen den unrunden Querschnitt aufweisenden Endabschnitt aufweist. Der Steckverbindungsteil der Drehstange ist ein ein offenes Ende aufweisender Hohlraum in einem Endabschnitt der Drehstange, wobei der Hohlraum einen dem unrunden Querschnitt des Endabschnittes des Verbindungszapfens entsprechenden Querschnitt hat und den Endabschnitt des Verbindungszapfens des weiteren Verriegelungsteiles verdrehsicher aufnimmt.

Vorzugsweise ist die Drehstange ein Rohr mit einer wenigstens innen mehrkantigen Querschnittsform und hat der Endabschnitt des Verbindungszapfens eine wenigstens außen mehrkantige Querschnittsform mit einer der Anzahl der Kanten der Querschnittsform des Rohres entsprechenden Zahl von Kanten. Ein Ende des Rohres kann dann über den Endabschnitt des Verbindungszapfens gestülpt werden.

Eine weitere Vereinfachung der Montage des Drehstangenverschlusses, bei dem die drehfeste Verbindung zwischen der Drehstange und dem weiteren Verriegelungsteil aus einer Steckverbindung besteht, kann dadurch erzielt werden, wenn wenigstens eine an der Tür, Klappe oder dergleichen befestigbare Lagerplatte vorgesehen ist, die ein rundes Fenster hat, durch das ein zylindrischer Lagerabschnitt des Verbindungszapfens des weiteren Verriegelungsteiles hindurchragt, um das weitere Verriegelungsteil drehbar an der Türe, Klappe oder dergleichen zu lagern.

Eine sichere und auch kostengünstige Lagerung des weiteren Verriegelungsteiles an der Tür, Klappe oder dergleichen kann dadurch erzielt werden, daß in einer das Fenster aufweisenden Vertiefung der Lagerplatte zwei Halteplatten verdrehsicher angeordnet sind, die jeweils eine durch eine halbkreisförmige Ausnehmung unterbrochene Stoßfläche haben und an ihren Stoßflächen aneinanderstoßen, wobei die halbkreisförmigen Ausnehmungen zu einem kreisrunden Loch komplettiert sind, in dem ein weiterer zylindrischer Lagerabschnitt des Verbindungszapfens drehbar aufgenommen ist, wobei der durch das von den Halteplatten gemeinsam gebildete Loch ragende weitere zylindrische Lagerabschnitt des Verbindungszapfens einen kleineren Durchmesser als der durch das Fenster der Lagerplatte ragende zylindrische Lagerabschnitt des Verbindungszapfens hat.

Verschiedene Ausführungsbeispiele der Erfindung sind in den Zeichnungen gezeigt und werden im folgenden näher beschrieben. Es zeigt:
- Fig. 1: eine Ansicht einer ersten Auführungsform eines Drehstangenverschlusses nach der Erfindung im montierten Zustand an einer Tür und einem Portalrahmen eines Nutzfahrzeugaufbaus,
- Fig. 2: eine Ansicht des unteren Teiles des in Fig. 1 darge- stellten Drehstangenverschlusses,
- Fig. 3: einen Schnitt des in Fig. 2 dargestellten unteren Teiles des Drehstangenverschlusses entlang der Linie III-III in Fig. 2,
- Fig. 4: eine Ansicht des in Fig. 2 dargestellten unteren Teiles des Drehstangenverschlusses von oben,
- Fig. 5: eine Ansicht einer abgewandelten Ausführungsform des in den Figuren 1 bis 4 gezeigten Drehstangenver- schlusses, wobei im wesentlichen nur ein weiteres Verriege- lungsteil und die mit ihm verbundene Drehstange jeweils nur zum Teil gezeigt sind,
- Fig. 6: eine Ansicht der in Fig. 5 dargestellten Ausführungsform von oben,
- Fig. 7: einen Schnitt der in den Figuren 5 und 6 dargestellten Ausführungsform entlang der Linie VII-VII in Fig. 5,
- Fig. 8: einen Schnitt der in den Figuren 5 bis 7 dargestellten Ausführungsform entlang der Linie VIII-VIII in Fig. 6,
- Fig. 9: eine perspektivische Darstellung der in den Figuren 5 bis 8 dargestellten Ausführungsform eines Dreh- stangenverschlusses,
- Fig. 10: eine Ansicht einer weiteren abgewandelten Ausfüh- rungsform eines Drehstangenverschlusses,
- Fig. 11: eine Ansicht der in Fig. 10 gezeigten Ausführungs- form von oben,
- Fig. 12: einen Schnitt der in den Figuren 10 und 11 darge- stellten Ausführungsform entlang der Linie XII-XII in Fig. 11,
- Fig. 13: einen Schnitt der in den Figuren 10 bis 12 dargestellten Ausführungsform entlang der Linie XIII- XIII in Fig. 10,
- Fig. 14: eine perspektivische Darstellung der in den Figuren 10 bis 13 gezeigten Ausführungsform eines Dreh- stangenverschlusses,
- Fig. 15: eine Ansicht einer weiteren abgewandelten Ausfüh- rungsform eines Drehstangenverschlusses,
- Fig. 16: eine Ansicht der in Fig. 15 gezeigten Ausführungs- form von oben,
- Fig. 17: einen Schnitt der in den Figuren 15 und 16 darge- stellten Ausführungsform entlang der Linie XVII-XVII in Fig. 16,
- Fig. 18: einen Schnitt der in den Figuren 15 bis 17 dargestellten Ausführungsform entlang der Linie XVIII- XVIII in Fig. 15,
- Fig. 19: eine perspektivische Darstellung der in den Figuren 15 bis 18 dargestellten Ausführungsform eines Drehstangenverschlusses,
- Fig. 20: eine weitere abgewandelte Ausführungsform eines Drehstangenverschlusses, wobei im wesentlichen nur ein weiteres Verriegelungsteil und die für dessen drehbare Lagerung an einer Tür, Klappe oder dergleichen vorgesehenen Lager- und Halteplatten dargestellt sind und die Drehstange nicht gezeigt ist,
- Fig. 21: eine Ansicht der in Fig. 20 gezeigten Ausführungs- form von oben,
- Fig. 22: einen Schnitt der in den Figuren 20 und 21 gezeigten Ausführungsform entlang der Linie XXII-XXII in Fig. 21, wobei die Lager- und Halteplatten im Schnitt und das weitere Verriegelungsteil ungeschnitten dargestellt sind, und
- Fig. 23: eine perspektivische Darstellung der in den Figuren 20 bis 22 gezeigten Ausführungsform eines Dreh- stangenverschlusses.

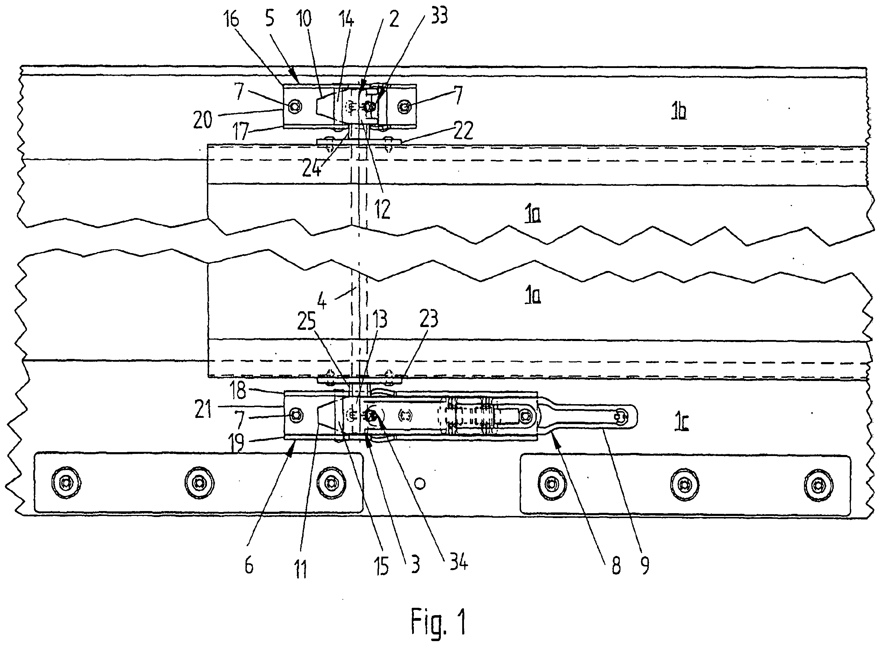

Wie in Fig. 1 ersichtlich ist, weist ein Drehstangenverschluß nach der Erfindung ein oberhalb einer mit dem Drehstangenverschluß zu verschließenden Tür 1a liegendes Verriegelungsteil 2 und ein unterhalb der Tür 1a liegendes Verriegelungsteil 3 auf, die durch eine in der Tür 1a verlaufende Drehstange 4 miteinander verbunden sind. Die Tür 1a ist an ihrem nicht dargestellten rechten Ende an einem seitlichen Rahmenteil des Nutzfahrzeugaufbaus schwenkbar gelagert. Die beiden Verriegelungsteile 2 und 3 wirken in der in Fig. 1 dargestellten Schließstellung mit jeweils einem Gegenhalter 5 bzw. 6 zusammen, die an einem oberen bzw. unteren Rahmenteil 1b bzw. 1c des Nutzfahrzeugaufbaus mittels Schrauben 7 befestigt sind. Die beiden Verriegelungsteile 2 und 3 sind mit der Drehstange 4 durch eine Nietverbindung 33 bzw. 34 drehfest und axial unverschieblich verbunden. Das untere Verriegelungsteil 3 ist mit einem Schwenkhebel 8 einstückig verbunden, der einen Handgriff 9 aufweist. Jedes Verriegelungsteil 2, 3 hat einen Spannzapfen 10 bzw. 11, der von einem Grundkörper 12 bzw. 13 des Verriegelungsteiles 2 bzw. 3 absteht und sich im wesentlichen quer zur Längsrichtung der Drehstange 4 erstreckt. Der Spannzapfen 11 und der Schwenkhebel 8 erstrecken sich vom Grundkörper 13 aus in entgegengesetzte Richtungen und liegen in einer gemeinsamen Ebene E, die von der Drehstange 4 senkrecht durchsetet wird.

Im Schließzustand des Drehstangenverschlusses hintergreifen die beiden Spannzapfen 10, 11 jeweils einen in paralleler Richtung zu der Drehstange 4 verlaufenden Stift 14 bzw. 15, der an dem jeweiligen Gegenhalter 5 bzw. 6 befestigt ist. Jeder Stift 14, 15 erstreckt sich zwischen zwei Schenkeln 16, 17 bzw. 18, 19 des jeweiligen im Querschnitt U-förmigen Gegenhalters 5, 6, wobei jeder Stift 14, 15 im Abstand von der die beiden Schenkel 16, 17 bzw. 18, 19 verbindenden Rückwand 20 bzw. 21 verläuft, so daß sich zwischen jedem Stift 14, 15 und der jeweiligen Rückwand 20 bzw. 21 ein Zwischenraum ergibt, durch den sich der jeweilige Spannzapfen 10 bzw. 11 im Schließzustand des Drehstangenverschlusses erstreckt.

An der Oberkante und an der Unterkante der Tür 1a ist jeweils eine Lagerplatte 22 bzw. 23 angenietet, von denen jede ein rundes Fenster hat, durch das die im Querschnitt runde Drehstange 4 mit geringem Spiel hindurchragt, so daß die Drehstange 4 an der Tür 1a drehbar gelagert ist. Zwischen der oberen Lagerplatte 22 und dem oberen Verriegelungsteil 2 einerseits und zwischen der unteren Lagerplatte 23 und dem unteren Verriegelungsteil 3 ist jeweils ein Distanzring 24 bzw. 25 um die Drehstange 4 herum angeordnet. Da jede Nietverbindung 33, 34 das Verriegelungsteil 2 bzw. 3 mit der Drehstange 4 auch axial unverschieblich verbindet, wird durch die Anordnung der Distanzringe 24 und 25 zwischen der Lagerplatte 22 und dem Verriegelungsteil 2 bzw. der Lagerplatte 23 und dem Verriegelungsteil 3 die Drehstange 4 samt den Verriegelungsteilen 2 und 3 axial unverschieblich an der Tür 1a gesichert.

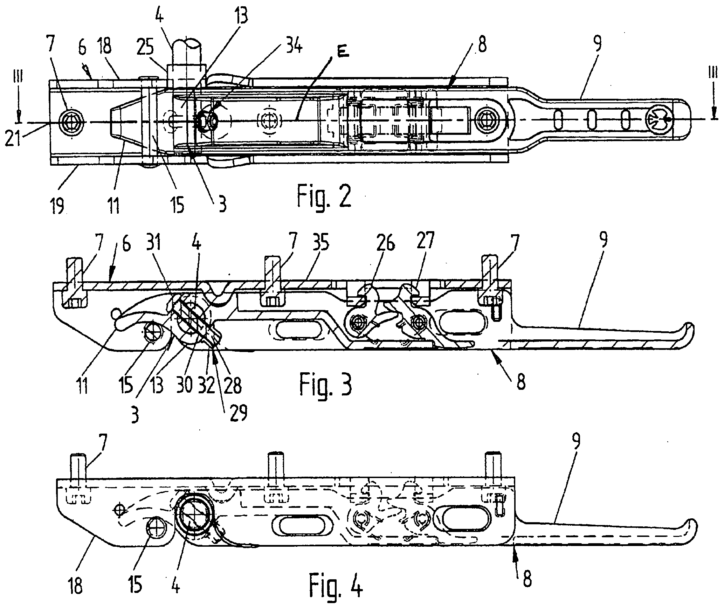

Wie in Fig. 3 ersichtlich ist, weist der Schwenkhebel 8 zwei federbelastete Sicherungshebel 26, 27 auf, die zusammenwirken und den Schwenkhebel 8 im Schließzustand an dem Gegenhalter 6 festhalten, der einen Gehäuseabschnitt 35 aufweist, in dem der Schwenkhebel 8 im Schließzustand untergebracht ist. Nach dem Lösen der Sicherungshebel 26 und 27 von dem Gegenhalter 6 kann der Schwenkhebel 8 um die Achse der Drehstange 4 von dem unteren Rahmenteil 1c weggeschwenkt werden, wobei sich die Drehstange 4 und die Verriegelungsteile 2 und 3 mitdrehen, derart, daß die Spannzapfen 10 und 11 aus ihrem Eingriff mit den Stiften 14 und 15 herausbewegt werden. Befinden sich die Spannzapfen 10 und 11 außer Eingriff mit den Stiften 14 und 15, läßt sich die Tür 1a öffnen.

Es versteht sich, daß der Drehstangenverschluß, nicht wie im Beispiel dargestellt, zwei Verriegelungsteile, von denen das eine mit dem Schwenkhebel verbunden ist, haben muß. Je nach Bauart und Baugröße der mit dem Drehstangenverschluß zu verschließenden Tür oder Klappe kann der Drehstangenverschluß auch nur ein Verriegelungsteil oder mehr als zwei Verriegelungsteile aufweisen, und kann der Schwenkhebel auch zwischen zwei Verriegelungsteilen angeordnet sein.

Im folgenden wird nun der Aufbau und die Wirkungsweise der Nietverbindungen 33 und 34 zwischen der Drehstange 4 und dem Verriegelungsteil 2 bzw. 3 näher beschrieben, wobei es genügt, auf die Nietverbindung 34 zwischen der Drehstange 4 und dem unteren Verriegelungsteil 3 näher einzugehen, da die Nietverbindung 33 zwischen der Drehstange 4 und dem oberen Verriegelungsteil 2 identisch ist.

Wie in Fig. 3 ersichtlich ist, verläuft der Schaft 28 eines Niets 29 koaxial durch eine Hülse 30, die ihrerseits in zwei axial fluchtenden, sich diametral gegenüberliegenden Nietbohrungen im Grundkörper 13 des Verriegelungsteiles 3 und einer zu diesen beiden Nietbohrungen axial fluchtenden weiteren Nietbohrung in der Drehstange 4 aufgenommen ist. Die beiden Nietbohrungen im Verriegelungsteil 3 und die Nietbohrung in der Drehstange 4, die zwischen den beiden Nietbohrungen im Verriegelungsteil 3 liegt, sind senkrecht zu der Achse der Drehstange 4 ausgerichtet. Der Niet 29 ist zweiteilig ausgeführt und weist einerseits den Schaft 28 mit dem an einem Ende des Schaftes 28 angeordneten Setzkopf 31 und andererseits den am anderen Ende des Schaftes 28 befestigten Schließring 32 auf. Der Setzkopf 31 und der Schließring 32 liegen an jeweils sich diametral gegenüberliegenden äußeren Wandabschnitten des Grundkörpers 13 des Verriegelungsteiles 3 an. Die Nietbohrungen im Grundkörper 13 und in der Drehstange 4 werden vollständig von dem Nietschaft 28 und der ihn umgebenden Hülse 30 ausgefüllt. Infolgedessen ist die Drehstange 4 mit dem Verriegelungsteil 3 über den Niet 29 formschlüssig verbunden, so daß sich zwischen der Drehstange 4 und dem Verriegelungsteil 3 eine feste Verbindung ergibt, die das Verriegelungsteil 3 und die Drehstange 4 daran hindern, sich relativ zueinander zu verdrehen oder axial zu verschieben. Eine entsprechende feste Verbindung zwischen der Drehstange 4 und dem Verriegelungsteil 2 schafft die zwischen diesen beiden Bauteilen wirkende Nietverbindung 33, die zu der Nietverbindung 34 identisch ist.

Die Montage des Drehstangenverschlusses läuft wie folgt ab:

Der Gegenhalter 5 und der Gegenhalter 6 werden an einem von der Türenfertigung separaten Arbeitsplatz an den liegenden oder bereits montierten Rahmen mit Hilfe der Schrauben 7 befestigt. Die Aufnahmelöcher für die Schrauben 7 wurden schon vorher in den Rahmen eingebracht. An dem die Türenfertigung durchzuführenden Arbeitsplatz wird wie folgt vorgegangen: Die Drehstange 4 und die auf sie aufgeschobenen Verriegelungsteile 2 und 3 werden gemeinsam in einer Vorrichtung gebohrt. Das Verriegelungsteil 3 und die Drehstange 4 werden vernietet. Das Verriegelungsteil 2 wird von der Drehstange 4 wieder abgezogen. Die Lagerplatte 23 und der Distanzring 25 werden auf die Drehstange 4 bis zum Verriegelungsteil 3 aufgefädelt. Die Drehstange 4 mit dem daran befestigten verriegelungsteil 3 wird durch die Tür 1a geschoben. Die Lagerplatte 23 wird an die Unterkante der Tür 1a in vorgefertigte Löcher angenietet. Die obere Lagerplatte 22 wird auf die Drehstange aufgeschoben und an der Oberkante der Tür 1a in vorgefertigten Löchern angenietet. Dann werden der Distanzring 24 und das obere Verriegelungsteil 2 auf die Drehstange 4 aufgefädelt. Zuletzt wird das Verriegelungsteil 2 ebenfalls mit der Drehstange 4 vernietet.

Die Tür kann dann am Rahmen eingehängt und mittels des Drehstangenverschlusses sofort geschlossen werden.

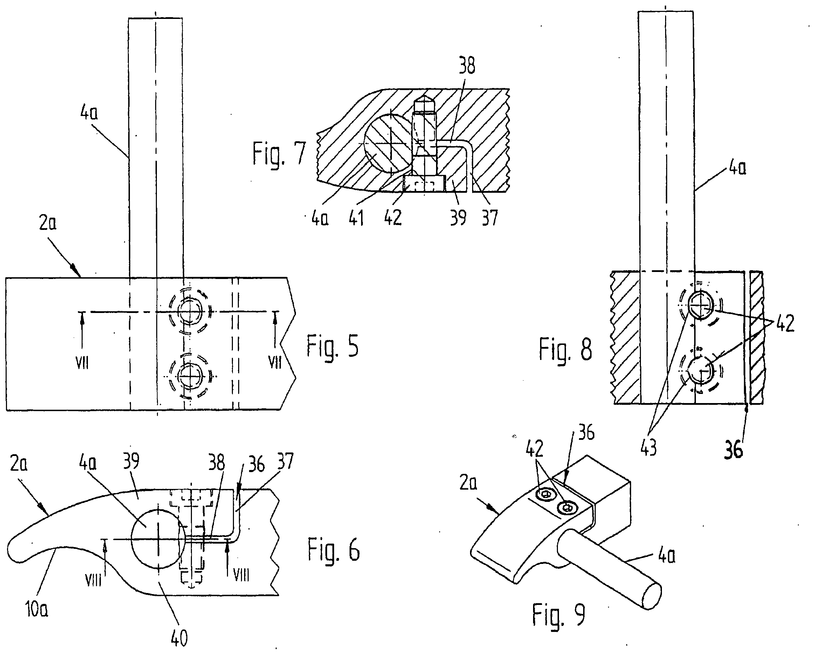

Vier weitere Ausführungsformen des Drehstangenverschlusses nach der Erfindung sind in den Figuren 5 bis 9, 10 bis 14, 15 bis 19 und 20 bis 23 dargestellt. In der folgenden Beschreibung werden für diejenigen Teile des Drehstangenverschlusses, die identisch oder ähnlich zu den entsprechenden Teilen der in den Figuren 1 bis 4 dargestellten Ausführungsform des Drehstangenverschlusses sind, die gleichen Bezugsziffern, jedoch unter Hinzufügung von Buchstaben a bis e bzw. strichen verwendet. Die vier weiteren Ausführungsformen des Drehstangenverschlusses werden anhand einer Verbindung zwischen der Drehstange und einem weiteren Verriegelungsteil, das nicht unmittelbar mit einem Schwenkhebel verbunden ist, näher beschrieben.

Bei der in den Figuren 5 bis 9 dargestellten Ausführungsform eines Drehstangenverschlusses weist das Verriegelungsteil 2a eine im Querschnitt runde Durchgangsbohrung auf, in der ein Endabschnitt der im Querschnitt runden Drehstange 4a aufgenommen ist. Zwischen der Durchgangsbohrung des Verriegelungsteiles 2a und der Außenseite des Verriegelungsteiles 2a erstreckt sich ein Schlitz 36, der aus zwei im rechten Winkel zueinander angeordneten Abschnitten 37 und 38 besteht, wobei sich der Schlitzabschnitt 38 von der Durchgangsbohrung des Verriegelungsteiles 2a aus in die entgegengesetzte Richtung zu der Erstreckungsrichtung des Spannzapfens 10a erstreckt. Der Schlitz 36 unterteilt das Verriegelungsteil 2a in zwei im Bereich des Spannzapfens 10a biegeelastisch miteinander verbundenen Abschnitten 39 und 40, die zusammen das Durchgangsloch in dem Verriegelungsteil 2a begrenzen. Zwei parallele Bohrungen 41 sind in dem Verriegelungsteil 2a so angeordnet, daß die Mittelachse jeder Bohrung 41 senkrecht zu der Mittelachse der die Drehstange 4a aufnehmenden Durchgangsbohrung und senkrecht zu der Erstreckungsrichtung des Schlitzabschnitts 38 verläuft. Jede Bohrung 41 erstreckt sich von der Außenseite, in die der Schlitzabschnitt 37 mündet, durch den Verriegelungsteilabschnitt 39 und setzt sich ein Stück weit im Verriegelungsteilabschnitt 40 fort, wobei jede Bohrung 41 die die Drehstange 4a aufnehmende Durchgangsbohrung und den Schlitzabschnitt 38 schneidet. In den im Verriegelungsteilabschnitt 40 liegenden Abschnitt der Bohrung 41 ist ein Gewinde eingeschnitten, in das eine Inbusschraube 42 eingedreht ist, die sich von der Außenseite, in welche der Schlitzabschnitt 37 mündet, bis hinein in den Abschnitt der Bohrung 41, der im Verriegelungsteilabschnitt 39 liegt, erstreckt.

Die Drehstange 4a weist in ihrer Oberfläche zwei axial beabstandete Ausnehmungen 43 auf, in denen jeweils ein Segment des Schaftes der jeweiligen Inbusschraube 42 aufgenommen ist.

Die beiden Verriegelungsabschnitte 39 und 40 werden im Bereich des Schlitzabschnittes 38 von den Schrauben 42 gegeneinander gezogen, also verspannt, wobei sie auf die Drehstange 4a einen Druck ausüben, so daß die Drehstange 4a reibschlüssig in der Durchgangsbohrung des Verriegelungsteiles 2a gehalten ist. Durch den formschlüssigen Eingriff der Schrauben 42 in die Ausnehmungen 43 der Drehstange 4a wird die Drehstange 4a über die Schrauben 42 formschlüssig mit dem Verriegelungsteil verbunden. Durch die Kombination von Reib- und Formschluß wird die Drehstange 4a in der Durchgangsbohrung des Verriegelungsteiles 2a verdrehsicher und in Axialrichtung unverschieblich sicher gehalten.

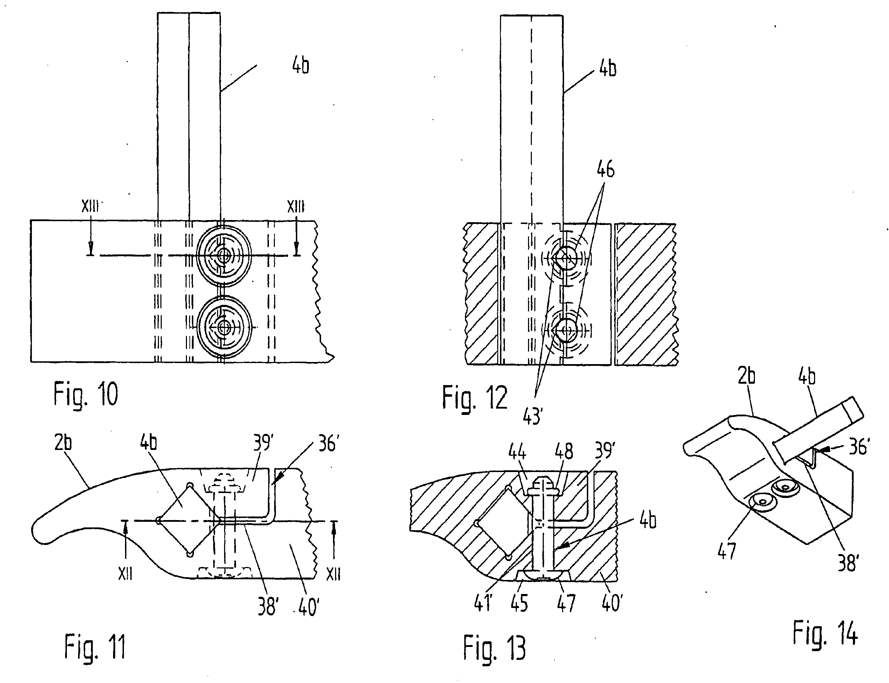

Die in den Figuren 10 bis 14 gezeigte Ausführungsform unterscheidet sich von der in den Figuren 5 bis 9 gezeigten Ausführungsform im wesentlichen dadurch, daß das einen Abschnitt der Drehstange 4b aufnehmende Durchgangsloch in dem Verriegelungsteil 2b im Querschnitt quadratisch ist und die Drehstange 4b im Querschnitt ebenfalls quadratisch oder vierkantig ist.

Ein weiterer Unterschied besteht darin, daß bei der in den Figuren 10 bis 14 dargestellten Ausführungsform zwei parallele Durchgangsbohrungen 41' vorgesehen sind, von denen jede die Verriegelungsteilabschnitte 39' und 40' durchdringt, wobei jede Durchgangsbohrung 41' den Schlitzabschnitt 38' und das die Drehstange 4b aufnehmende Durchgangsloch im Verriegelungsteil 2b an einer Ecke des Durchgangsloches schneidet. Jede Durchgangsbohrung 41' mündet an ihrem im Verriegelungsteilabschnitt 39' liegenden Ende in eine konische Ausnehmung 44 im Verriegelungsteilabschnitt 39' und an ihrem im Verriegelungsteilabschnitt 40' liegenden Ende in eine konische Ausnehmung 45 im Verriegelungsteilabschnitt 40'. Die konische Ausnehmung 44 ist etwas tiefer als die konische Ausnehmung 45. An einer Kante der vierkantigen Drehstange 4b befinden sich zwei voneinander beabstandete im Querschnitt v-förmige Ausnehmungen 43'. Ein Niet 46, der einen Setzkopf 47 mit aufweist, ist durch die Durchgangsbohrung 41' hindurchgeführt und mit einem Schließring 48 verbunden, der an dem in die konische Ausnehmung 44 ragenden Ende des Niets 46 befestigt ist, während der Setzkopf 47 des Niets 46 in der konischen Ausnehmung 45 im Verriegelungsteilabschnitt 40' liegt. Der Schaft jedes Niets 46 verläuft auch durch die Ausnehmung 43' in der Drehstange 4b, wobei der Schaft eines jeden Niets 46 an den Wänden der jeweiligen Ausnehmung 43' anliegt, wie in Figur 12 ersichtlich ist. Die beiden Verriegelungsteilabschnitte 39' und 40' werden durch den Niet 46 gegeneinander gedrückt, also verspannt, wodurch die Verriegelungsteilabschnitte 39' und 40' an die Außenseite der Drehstange 4b gedrückt werden. Die Drehstange 4b wird somit durch einen vorgespannten Formschluß drehsicher in dem Durchgangsloch des Verriegelungsteiles 2b gehalten. Durch den Eingriff des Schaftes eines jeden Niets 46 in die jeweilige Ausnehmung 43' in der Drehstange 4b wird die Drehstange 4b zusätzlich in Axialrichtung unverschieblich relativ zu dem Verriegelungsteil 2b gehalten. Anstelle der Nieten 46 könnten auch Durchsteckschrauben mit Muttern verwendet werden.

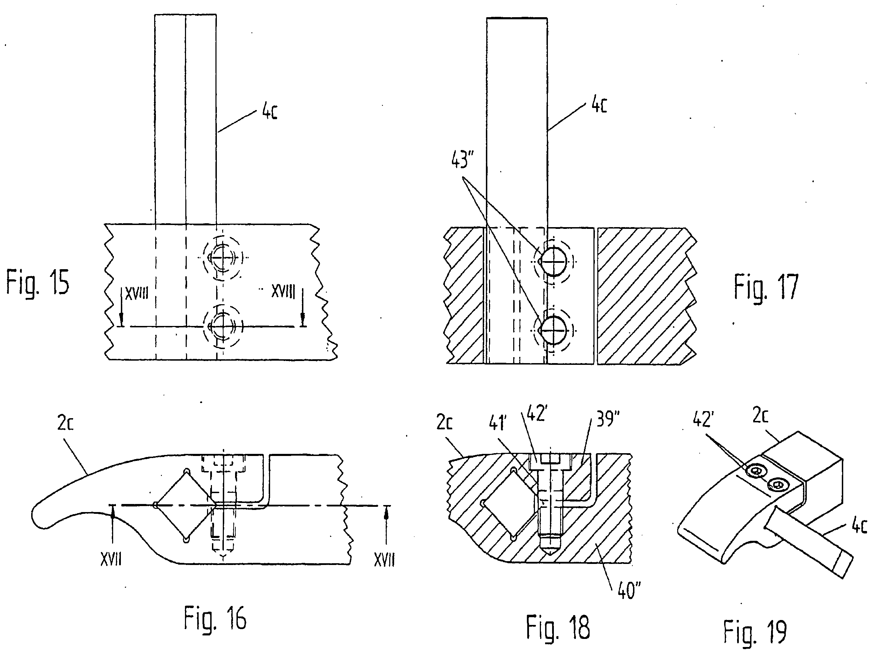

Die in den Figuren 15 bis 19 gezeigte Ausführungsform unterscheidet sich von der in den Figuren 10 bis 14 gezeigten Ausführungsform im wesentlichen nur dadurch, daß die beiden Verriegelungsteilabschnitte 39" und 40" mittels zweier Kopfschrauben 42' mit Innensechskant verspannt sind, die jeweils in einer Bohrung 41' angeordnet sind, die den Verriegelungsteilabschnitt 39" vollständig durchdringt und ein Stück weit in den Verriegelungsteilabschnitt 40" hineinragt. Ein Gewinde ist in den im Verriegelungsteilabschnitt 40" liegenden Abschnitt der Bohrung 41' eingeschnitten und ist in Eingriff mit dem Gewinde der Schraube 42'. Die Drehstange 4c ist im Querschnitt wieder quadratisch oder vierkantig und wird von einem im Querschnitt wieder quadratischen Durchgangsloch im Verriegelungsteil 2c aufgenommen. Der Schaft einer jeden Schraube 42' ragt durch jeweils eine im Querschnitt V-förmige Ausnehmung 43" in der Drehstange 4c. Die Drehstange 4c wird in dem im Querschnitt quadratischen Durchgangsloch im Verriegelungsteil 2c durch Verspannen der beiden Verriegelungsteilabschnitte 39" und 40" verdrehsicher und axialfest gehalten. Die Verbindung zwischen dem Verriegelungsteil 2c und der Drehstange 4c beruht also wieder, wie bei den beiden vorhergehenden Ausführungsformen, auf der Kombination eines vorgespannten Formschlusses und Reibungsschlusses.

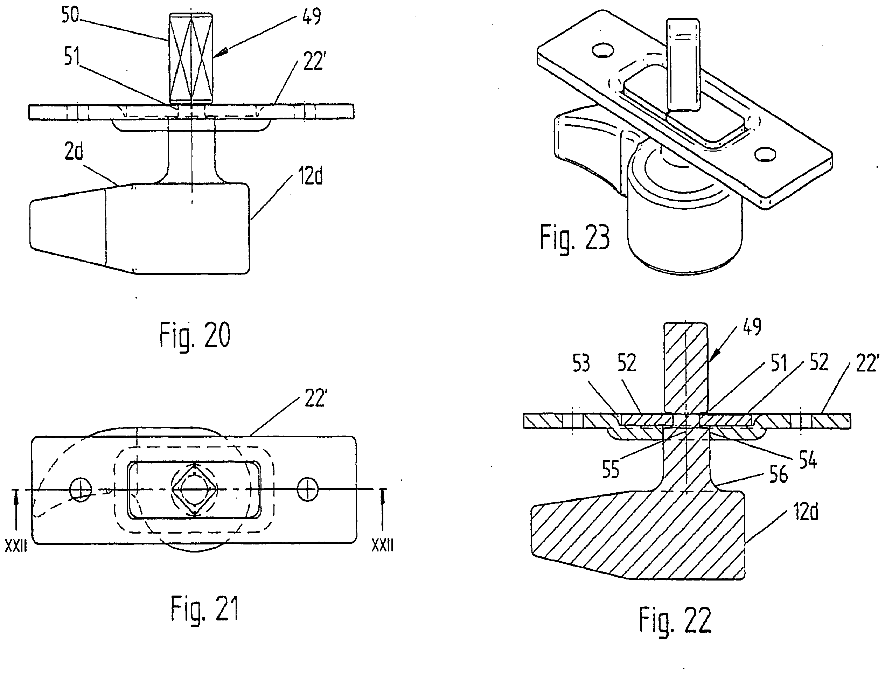

Bei der in den Figuren 20 bis 23 dargestellten Ausführungsform ist das Verriegelungsteil 2d mit der nicht dargestellten Drehstange, die aus einem Vierkantrohr gebildet ist, durch Ineinanderstecken verbunden. Im Einzelnen weist das Verriegelungsteil 2d einen vom Grundkörper 12d abstehenden Verbindungszapfen 49 auf, der sich in Längsrichtung der nicht dargestellten Drehstange erstreckt. Der Verbindungszapfen 49 hat einen im Querschnitt vierkantigen Endabschnitt 50, über den ein Endabschnitt der als Vierkantrohr ausgebildeten Drehstange gestülpt wird, um die Steckverbindung zu schaffen. An dem Verbindungszapfen 49 befindet sich ein zylindrischer Lagerabschnitt 51, der durch ein kreisrundes Loch ragt, das von zwei halbkreisförmigen Ausnehmungen in zwei aneinanderstoßenden Halteplatten 52 gebildet wird. Die beiden Halteplatten 52 liegen verdrehsicher in einer Vertiefung 53 der Lagerplatte 22' die an die nicht dargestellte Tür annietbar ist. Die Lagerplatte 22' weist im Bereich ihrer Vertiefung 53 ein rundes Fenster 54 auf, durch das ein weiterer zylindrischer Lagerabschnitt 55 des Verbindungszapfens 49 ragt. Der zylindrische Lagerabschnitt 51 ist im Durchmesser kleiner als der zylindrische Lagerabschnitt 55, der über einen sich im Durchmesser erweiternden Basisabschnitt 56 mit dem Grundkörper 12d des Verriegelungsteiles 2d einstückig verbunden ist. Das runde Fenster 54 in der Lagerplatte 22' ist im Durchmesser größer als die Diagonale des vierkantigen Endabschnitts 50 des Verbindungszapfens 49.

## Patentansprüche

1. Drehstangenverschluss für Türen, Klappen oder dergleichen von Nutzfahrzeugaufbauten, mit einer um ihre Längsachse drehbaren Drehstange (4), einem mit der Drehstange drehfest verbundenen Verriegelungsteil (3), das einen Grundkörper (13), der zur koaxialen Aufnahme eines zylindrischen Abschnitts der Drehstange (4) mit einer zylindrischen Hauptbohrung versehen ist, und einen vom Grundkörper abstehenden Spannzapfen (11) aufweist, der sich im wesentlichen in einer quer zur Längsrichtung der Drehstange verlaufenden Richtung erstreckt, einem an einem festen Teil (1c) des Nutzfahrzeugaufbaus befestigbaren Gegenhalter (6), mit dem der Spannzapfen in Eingriff bringbar ist, und einem mit der Drehstange drehfest verbundenen Schwenkhebel (8), der sich im wesentlichen quer zur Längsrichtung der Drehstange in einer zu der Erstreckungsrichtung des Spannzapfens entgegengesetzten Richtung erstreckt, wobei das Verriegelungsteil (3) durch eine Formschlussverbindung mit der Drehstange (4) drehfest verbunden ist, wobei der Schwenkhebel (8) und das Verriegelungsteil (3) einstückig miteinander verbunden sind, und sich der Schwenkhebel (8) und der Spannzapfen (11) jeweils vom Grundkörper (13) aus in entgegengesetzte Richtungen erstrecken und in einer gemeinsamen, senkrecht von der Drehstange (4) durchsetzten Ebene (III-III) liegen, **dadurch gekennzeichnet, dass** die Formschlussverbindung eine Nietverbindung (34) ist, die einen zweiteilig ausgeführten Niet (29) beinhaltet, der einerseits einen Schaft (28) mit einem am einen Ende des Schaftes (28) angeordneten Setzkopf (31), und andererseits einen am anderen Ende des Schaftes (28) befestigten Schließring (32) aufweist, wobei der Schaft (28) durch zwei senkrecht zur Längsachse der Drehstange (4) verlaufende, axial fluchtende und sich diametral gegenüberliegende Nietbohrungen im Verriegelungsteil (3) und eine zu diesen zwei Nietbohrungen axial fluchtende Nietbohrung in dem zylindrischen Abschnitt der Drehstange (4) hindurchgeführt ist, wobei in den jeweils axial fluchtenden Nietbohrungen des Verriegelungsteiles (3) und der Drehstange (4) eine zylindrische Hülse (30) aus hochfestem Federstahl koaxial angeordnet ist und der Schaft (28) des Niets (29) koaxial durch die Bohrung des Hülse (30) verläuft.

2. Drehstangenverschluss nach Anspruch 1, **dadurch gekennzeichnet, dass** ein in Längsrichtung der Drehstange (4) von dem einstückig mit dem Schwenkhebel (8) verbundenen Verriegelungsteil (3) beabstandetes weiteres Verriegelungsteil (2, 2a, 2b, 2c, 2d) vorgesehen ist, das durch eine Formschluss- und/oder Reibschlussverbindung mit der Drehstange (4, 4a, 4b, 4c) drehfest verbunden ist und einen Grundkörper (12, 12d) aufweist, von dem ein Spannzapfen (10, 10a) absteht, der mit einem weiteren Gegenhalter (5) in Eingriff bringbar ist, der an einem festen Teil (1b) des Nutzfahrzeugaufbaus befestigbar ist.

3. Drehstangenverschluß nach einem der vorhergehenden Ansprüche, **dadurch gekennzeichnet, daß** wenigstens eine an der Tür (1a), Klappe oder dergleichen befestigbare Lagerplatte (22, 23) vorgesehen ist, die ein rundes Fenster hat, durch das ein zylindrischer Abschnitt der Drehstange (4) hindurchragt, um die Drehstange (4) drehbar an der Tür (1a), Klappe oder dergleichen zu lagern.

4. Drehstangenverschluß nach Anspruch 3, **dadurch gekennzeichnet, daß** ein die Drehstange (4) koaxial umgebender Distanzring (24, 25) zwischen der oder jeder Lagerplatte (22, 23) und dem bzw. dem jeweiligen Verriegelungsteil (2, 3) vorgesehen ist.

5. Drehstangenverschluß nach Anspruch 2, **dadurch gekennzeichnet, daß** das weitere Verriegelungsteil (2a, 2b, 2c) ein Durchgangsloch und einen zwischen dem Durchgangsloch und der Außenseite des weiteren Verriegelungsteiles sich erstreckenden Schlitz (36, 36') hat, der von zwei das Durchgangsloch umgebenden biegeelastisch miteinander verbundenen Abschnitten (39, 39', 39", 40, 40' 40") des weiteren Verriegelungsteiles begrenzt wird, und ein Abschnitt der Drehstange (4a, 4b, 4c) in dem Durchgangsloch aufgenommen und durch eine von den beiden Abschnitten des weiteren Verriegelungsteiles ausgeübte Klemmkraft verdrehsicher gehalten wird, die durch Verspannen der beiden Abschnitte des weiteren Verriegelungsteiles mittels einer Schraub- oder Nietverbindung (42, 42', 46) erzeugt wird.

6. Drehstangenverschluß nach Anspruch 5, **dadurch gekennzeichnet, daß** der in dem Durchgangsloch des weiteren Verriegelungsteiles (2b, 2c) aufgenommene Abschnitt der Drehstange (4b, 4c) und das Durchgangsloch unrunde Querschnitte haben, die einander angepaßt sind, derart, dass der Abschnitt der Drehstange (4b, 4c) formschlüssig in dem Durchgangsloch des weiteren Verriegelungsteiles (2b, 2c) aufgenommen ist, wobei sich in Anlage miteinander befindliche Wandteile des Durchgangsloches und des in ihm aufgenommenen Drehstangenabschnittes durch die Schrauboder Nietverbindung (42, 46) aneinandergedrückt werden.

7. Drehstangenverschluß nach Anspruch 6, **dadurch gekennzeichnet, dass** der Querschnitt des Durchgangsloches und der Querschnitt des in ihm aufgenommenen Drehstangenabschnittes jeweils mehreckig sind.

8. Drehstangenverschluß nach Anspruch 7, **dadurch gekennzeichnet, dass** der Querschnitt des Durchgangsloches und der Querschnitt des in ihm aufgenommenen Drehstangenabschnittes jeweils viereckig sind.

9. Drehstangenverschluß nach Anspruch 5, **dadurch gekennzeichnet, dass** der in dem Durchgangsloch des weiteren Verriegelungsteiles (2a) aufgenommene Abschnitt der Drehstange (4a) und das Durchgangsloch kreisförmige Querschnitte haben, die einander angepaßt sind, derart, dass wenn die beiden Abschnitte (39, 40) des weiteren Verriegelungsteiles (2a) miteinander verspannt sind, die Wand des Durchgangsloches reibschlüssig in Anlage mit dem in dem Durchgangsloch aufgenommenenen Abschnitt der Drehstange (4a) ist.

10. Drehstangenverschluß nach einem der Ansprüche 5 bis 9, **dadurch gekennzeichnet, dass** die Schraub- oder Nietverbindung mindestens eine Schraube (42, 42', 46) bzw. einen Niet aufweist, deren bzw. dessen Schaft durch eine Ausnehmung (43, 43', 43") in der Oberfläche des in dem Durchgangsloch des weiteren Verriegelungsteiles (2a, 2b, 2c) aufgenommenen Abschnittes der Drehstange (4a, 4b, 4c) verläuft, derart, dass durch Anlage des Schrauben- bzw. Nietschaftes an der Wand der Ausnehmung (43, 43', 43") das weitere Verriegelungsteil und die Drehstange (4a, 4b, 4c) in deren Längsrichtung relativ zueinander unverschieblich sind.

11. Drehstangenverschluß nach Anspruch 2, **dadurch gekennzeichnet, dass** die drehfeste Verbindung zwischen der Drehstange und dem weiteren Verriegelungsteil (2d) aus einer Steckverbindung besteht, die aus zwei zusammengesteckten, jeweils einen unrunden Querschnitt aufweisenden Steckverbindungsteilen (49) des weiteren Verriegelungsteiles (2d) und der Drehstange gebildet ist.

12. Drehstangenverschluß nach Anspruch 11, **dadurch gekennzeichnet, dass** der Steckverbindungsteil des weiteren Verriegelungsteils (2d) ein von dessen Grundkörper (12d) abstehender Verbindungszapfen (49) ist, der sich in Längsrichtung der Drehstange erstreckt und einen den unrunden Querschnitt aufweisenden Endabschnitt (50) aufweist, und der Steckverbindungsteil der Drehstange ein ein offenes Ende aufweisender Hohlraum in einem Endabschnitt der Drehstange ist, wobei der Hohlraum einen dem unrunden Querschnitt des Endabschnittes des Verbindungszapfens (49) entsprechenden Querschnitt hat und den Endabschnitt des Verbindungszapfens (49) des weiteren Verriegelungsteiles (2d) verdrehsicher aufnimmt.

13. Drehstangenverschluß nach Anspruch 12, **dadurch gekennzeichnet, dass** die Drehstange ein Rohr mit einer wenigstens innen mehrkantigen Querschnittsform ist, der Endabschnitt (50) des Verbindungszapfens (49) eine wenigstens außen mehrkantige Querschnittsform mit einer der Anzahl der Kanten der Querschnittsform der Drehstange entsprechenden Zahl von Kanten hat und ein Ende der Drehstange über den Endabschnitt (50) des Verbindungszapfens (49) gestülpt ist.

14. Drehstangenverschluß nach Anspruch 13, **dadurch gekennzeichnet, dass** die Drehstange ein Vierkantrohr ist, und der Verbindungszapfen (49) massiv ist und einen mehrkantigen Endabschnitt (50) hat.

15. Drehstangenverschluß nach einem der Ansprüche 11 bis 14, **dadurch gekennzeichnet, dass** eine an der Tür, Klappe oder dergleichen befestigbare Lagerplatte (22') vorgesehen ist, die ein rundes Fenster (54) hat, durch das ein zylindrischer Lagerabschnitt (55) des Verbindungszapfens (49) des weiteren Verriegelungsteiles (2d) hindurchragt, um das weitere Verriegelungsteil (2d) drehbar an der Tür, Klappe oder dergleichen zu lagern.

16. Drehstangenverschluß nach Anspruch 15, **dadurch gekennzeichnet, dass** in einer das Fenster (54) aufweisenden Vertiefung (53) der Lagerplatte (22') zwei Halteplatten (52) verdrehsicher angeordnet sind, die jeweils eine durch eine halbkreisförmige Ausnehmung unterbrochene Stoßfläche haben und an ihren Stoßflächen aneinanderstoßen, wobei die halbkreisförmigen Ausnehmungen zu einem kreisrunden Loch komplettiert sind, in dem ein weiterer zylindrischer Lagerabschnitt (51) des Verbindungszapfens (49) drehbar aufgenommen ist, wobei der durch das von den Halteplatten (52) gemeinsam gebildete Loch ragende weitere zylindrische Lagerabschnitt (51) des Verbindungszapfens (49) einen kleineren Durchmesser als der durch das Fenster (54) der Lagerplatte (22') ragende zylindrische Lagerabschnitt (55) des Verbindungszapfens (49) hat.

17. Drehstangenverschluß nach Anspruch 16, **dadurch gekennzeichnet, dass** der weitere zylindrische Lagerabschnitt (51) des Verbindungszapfens (22') zwischen dem einen unrunden Querschnitt aufweisenden Endabschnitt (50) des Verbindungszapfens (49) und dem einen größeren Durchmesser aufweisenden zylindrischen Lagerabschnitt (55) des Verbindungszapfens (49) angeordnet ist und der einen größeren Durchmesser aufweisende zylindrische Lagerabschnitt (55) über einen Basisabschnitt (56) einstückig mit dem Grundkörper (12d) des weiteren Verriegelungsteiles (22') verbunden ist.

18. Drehstangenverschluß nach Anspruch 17, **dadurch gekennzeichnet, dass** das Fenster (54) in der Lagerplatte (22') einen Durchmesser hat, der größer als die größte Dicke des Endabschnittes (50) des Verbindungszapfens (49) ist.

19. Drehstangenverschluß nach einem der vorhergehenden Ansprüche, **dadurch gekennzeichnet, dass** der Gegenhalter (6) des mit dem Schwenkhebel (8) einstückig ausgebildeten Verriegelungsteiles (3) einen Gehäuseabschnitt (35) aufweist, der eine Vertiefung hat, in dem der Schwenkhebel (8) zumindest im Schließzustand wenigstens teilweise untergebracht ist.

20. Drehstangenverschluß nach einem der vorhergehenden Ansprüche, **dadurch gekennzeichnet, dass** die Drehstange ein Rohr ist.

## Claims

1. A rotary bar closure for doors, shutters or the like of utility vehicle bodies, with a rotary bar (4) rotatable about the longitudinal axis thereof, a locking part (3) which is connected in a rotationally fixed manner to the rotary bar and has a main body (13), which is provided with a cylindrical main bore to coaxially receive a cylindrical portion of the rotary bar (4), and a clamping pin (11) which projects from the main body and which extends substantially in a direction running transversely to the longitudinal direction of the rotary bar, a counterholder (6) which is capable of being fastened to a fixed part (1c) of the utility vehicle body and by which the clamping pin is capable of being brought into engagement, and a pivot lever (8) which is connected in a rotationally fixed manner to the rotary bar and which extends substantially transversely to the longitudinal direction of the rotary bar in a direction opposed to the extension direction of the clamping pin, wherein the locking part (3) is connected in a rotationally fixed manner to the rotary bar (4) by a connection with positive locking, wherein the pivot lever (8) and the locking part (3) are joined integrally to each other in one piece, and the pivot lever (8) and the clamping pin (11) in each case extend in opposite directions from the main body (13) and are situated in a common plane (III-III) traversed at a right angle by the rotary bar (4), **characterized in that** the connection with positive locking is a rivet connection (34) which contains a two-part rivet (29), which on the one hand has a shank (28) with a die head (31) arranged at one end of the shank (28) and on the other hand has a locking ring (32) fastened at the other end of the shank (28), wherein the shank (28) is guided in the locking part (3) through two rivet bores in axial alignment extending at a right angle to the longitudinal axis of the rotary bar (4) and diametrically opposite each other and in the cylindrical portion of the rotary bar (4) through a rivet bore in axial alignment with these two rivet bores, wherein a cylindrical sleeve (30) made of high-tensile spring steel is arranged coaxially in the respectively axially aligned rivet bores of the locking part (3) and the rotary bar (4), and the shank (28) of the rivet (29) extends coaxially through the bore of the sleeve (30).

2. A rotary bar closure according to claim 1, **characterized in that** a further locking part (2, 2a, 2b, 2c, 2d) is provided which is spaced in the longitudinal direction of the rotary bar (4) from the locking part (3) joined integrally to the pivot lever (8) in one piece and which is connected in a rotationally fixed manner to the rotary bar (4, 4a, 4b, 4c) by a connection with positive locking and/or friction locking and has a main body (12, 12d) from which a clamping pin (10,10a) projects which is capable of being brought into engagement with a further counterholder (5) which is capable of being fastened to a fixed part (1 b) of the utility vehicle body.

3. A rotary bar closure according to any one of the preceding claims, **characterized in that** at least one mounting plate (22, 23) is provided which is capable of being fastened to the door (1 a), shutter or the like and which has a round window through which a cylindrical portion of the rotary bar (4) projects, in order to mount the rotary bar (4) in a rotatable manner on the door (1 a), shutter or the like.

4. A rotary bar closure according to claim 3, **characterized in that** a spacer ring (24, 25) surrounding the rotary bar (4) coaxially is provided between the or each mounting plate (22, 23) and the or the respective locking part (2, 3).

5. A rotary bar closure according to claim 2, **characterized in that** the further locking part (2a, 2b, 2c) has a continuous hole and a slot (36, 36') which extends between the continuous hole and the outside of the further locking part and which is bounded by two portions (39, 39', 39", 40, 40', 40") of the further locking part which surround the continuous hole and which are joined to each other in a flexibly resilient manner, and a portion of the rotary bar (4a, 4b, 4c) is received in the continuous hole and is held in a manner preventing rotation by a clamping force which is exerted by the two portions of the further locking part and which is produced by clamping the two portions of the further locking part by means of a screw or rivet fastening (42, 42', 46).

6. A rotary bar closure according to claim 5, **characterized in that** the portion of the rotary bar (4b, 4c) received in the continuous hole of the further locking part (2b, 2c) and the continuous hole have non-round cross-sections which are adapted to each other in such a way that the portion of the rotary bar (4b, 4c) is received in a positively locking manner in the continuous hole of the further locking part (2b, 2c), wherein wall portions of the continuous hole - in abutment with each other - and of the portion of the rotary bar received therein are pressed against each other by the screw or rivet fastening (42, 46).

7. A rotary bar closure according to claim 6, **characterized in that** the cross-section of the continuous hole and the cross-section of the portion of the rotary bar received therein are polygonal in each case.

8. A rotary bar closure according to claim 7, **characterized in that** the cross-section of the continuous hole and the cross-section of the portion of the rotary bar received therein are square in each case.

9. A rotary bar closure according to claim 5, **characterized in that** the portion of the rotary bar (4a) received in the continuous hole of the further locking part (2a) and the continuous hole have circular cross-sections which are adapted to each other in such a way that when the two portions (39, 40) of the further locking part (2a) are clamped to each other the wall of the continuous hole abuts with friction locking against the portion of the rotary bar (4a) received in the continuous hole.

10. A rotary bar closure according to any one of claims 5 to 9, **characterized in that** the screw or rivet fastening has at least one screw (42, 42', 46) or a rivet, the shank of which extends through a recess (43, 43', 43") in the surface of the portion of the rotary bar (4a, 4b, 4c) received in the continuous hole of the further locking part (2a, 2b, 2c), in such a way that by abutment of the shank of the screw or rivet against the wall of the recess (43, 43', 43") the further locking part and the rotary bar (4a, 4b, 4c) are immovable relative to each other in the longitudinal direction of the latter.

11. A rotary bar closure according to claim 2, **characterized in that** the rotationally fixed connection between the rotary bar and the further locking part (2d) comprises a plug-in connection which is formed from two plug-in connection parts (49) of the further locking part (2d) and the rotary bar which are interlocked with each other and in each case have a non-round cross-section.

12. A rotary bar closure according to claim 11, **characterized in that** the plug-in connection part of the further locking part (2d) is a connecting pin (49) which projects from the main body (12d) thereof and which extends in the longitudinal direction of the rotary bar and has an end portion (50) comprising the non-round cross-section, and the plug-in connection part of the rotary bar is a cavity - having an open end - in an end portion of the rotary bar, wherein the cavity has a cross-section corresponding to the non-round cross-section of the end portion of the connecting pin (49) and receives the end portion of the connecting pin (49) of the further locking part (2d) in a manner preventing rotation.

13. A rotary bar closure according to claim 12, **characterized in that** the rotary bar is a tube with a cross-sectional shape which is polygonal at least on the inside, the end portion (50) of the connecting pin (49) has a cross-sectional shape which is polygonal at least on the outside with a number of edges corresponding to the number of the edges of the cross-sectional shape of the rotary bar, and one end of the rotary bar is folded over the end portion (50) of the connecting pin (49).

14. Rotary bar closure according to claim 13, **characterized in that** the rotary bar is a square tube, and the connecting pin (49) is solid and has a polygonal end portion (50).

15. A rotary bar closure according to any one of claims 11 to 14, **characterized in that** a mounting plate (22') is provided which is capable of being fastened to the door, shutter or the like and which has a round window (54) through which a cylindrical mounting portion (55) of the connecting pin (49) of the further locking part (2d) projects, in order to mount the further locking part (2d) in a rotatable manner on the door, shutter or the like.

16. A rotary bar closure according to claim 15, **characterized in that** two holding plates (52), which have in each case an abutment face interrupted by a semicircular recess and which abut against each other at their abutment faces, are arranged in a manner preventing rotation in a depression (53) in the mounting plate (22') having the window (54), wherein the semicircular recesses are completed to form a circular hole in which a further cylindrical mounting portion (51) of the connecting pin (49) is received in a rotatable manner, wherein the further cylindrical mounting portion (51) of the connecting pin (49) projecting through the hole formed jointly by the holding plates (52) has a smaller diameter than the cylindrical mounting portion (55) of the connecting pin (49) projecting through the window (54) of the mounting plate (22').

17. A rotary bar closure according to claim 16, **characterized in that** the further cylindrical mounting portion (51) of the mounting plate (22') is arranged between the end portion (50) of the connecting pin (49) having a non-round cross-section and the cylindrical mounting portion (55) of the connecting pin (49) having a larger diameter, and the cylindrical mounting portion (55) having a larger diameter is joined in an integral manner to the main body (12d) of the further locking portion (22') by way of a base portion (56).

18. A rotary bar closure according to claim 17, **characterized in that** the window (54) in the mounting plate (22') has a diameter which is larger than the greatest thickness of the end portion (50) of the connecting pin (49).

19. A rotary bar closure according to any one of the preceding claims, **characterized in that** the counterholder (6) of the locking part (3) formed integrally in one piece with the pivot lever (8) has a housing portion (35) which has a depression in which the pivot lever (8) is housed at least in part at least in the closed state.

20. A rotary bar closure according to any one of the preceding claims, **characterized in that** the rotary bar is a tube.

## Revendications

1. Fermeture à barre rotative pour les portes, les trappes ou éléments similaires des carrosseries de véhicules utilitaires, comportant une barre rotative (4), apte à tourner autour de son axe longitudinal, un élément de verrouillage (3), relié de manière solidaire en rotation avec la barre rotative et muni d'un corps de base (13) qui, pour la réception coaxiale d'un tronçon cylindrique de la barre rotative (4), est muni d'une forure principale cylindrique, et d'un téton de serrage (11), en saillie sur le corps de base et orienté sensiblement dans une direction orientée transversalement à la direction longitudinale de la barre rotative, un contre-support (6), qui est apte à être fixé à un élément fixe (1c) de la carrosserie du véhicule utilitaire et avec lequel le téton de serrage peut être amené en prise, et un levier pivotant (8) qui est relié de manière solidaire en rotation avec la barre rotative et qui s'étend sensiblement transversalement à la direction longitudinale de la barre rotative dans une direction opposée à la direction d'extension du téton de serrage, sachant que l'élément de verrouillage (3) est assemblé de manière solidaire en rotation par un assemblage par conjugaison de forme avec la barre rotative (4), que le levier pivotant (8) et l'élément de verrouillage (3) sont reliés d'un seul tenant l'un à l'autre, et que le levier pivotant (8) et le téton de serrage (11) s'étendent chacun à partir du corps de base (13) dans des directions opposées et sont situés dans un plan (III-III) commun, traversé perpendiculairement par la barre rotative (4), **caractérisée en ce que** l'assemblage par conjugaison de forme est un assemblage riveté (34), qui contient un rivet (29) exécuté en deux partie, qui comporte d'un côté une tige (28) avec une tête de fixation (31) disposée à une extrémité de la tige (28), et de l'autre côté un anneau de fermeture (32) fixé à l'autre extrémité de la tige (28), dans lequel la tige (28) est guidée à travers deux forures pour rivet, orientées perpendiculairement à l'axe longitudinal de la barre rotative (4), alignées axialement et diamétralement opposées dans l'élément de verrouillage (3), et à travers une forure pour rivet alignée axialement à ces deux forures pour rivet dans le tronçon cylindrique de la barre rotative (4), dans lequel un manchon (30) cylindrique en acier à ressort à haute résistance est agencé coaxialement dans les forures pour rivet, alignées axialement selon le cas, de l'élément de verrouillage (3) et de la barre rotative (4) et la tige (28) du rivet (29) s'étend coaxialement à travers la forure du manchon (30).

2. Fermeture à barre rotative selon la revendication 1, **caractérisée en ce qu'**il est prévu un élément de verrouillage (2, 2a, 2b, 2c, 2d) supplémentaire qui, dans la direction longitudinale de la barre rotative (4), est écarté de l'élément de verrouillage (3) relié d'un seul tenant au levier pivotant (8) et qui est relié de manière solidaire en rotation par un assemblage par conjugaison de forme et/ou un assemblage par friction avec la barre rotative (4, 4a, 4b, 4c), et comporte un corps de base (12, 12d) sur lequel s'avance en saillie un téton de serrage (10, 10a) qui peut être amené en prise avec un contre-support (5) supplémentaire qui peut être fixé contre un élément fixe (1b) de la carrosserie du véhicule utilitaire.

3. Fermeture à barre rotative selon l'une quelconque des revendications précédentes, **caractérisée en ce qu'**il est prévu au moins une plaque d'appui (22, 23), qui peut être fixée contre la porte (1a), la trappe ou élément similaire et qui comporte une fenêtre ronde à travers laquelle passe un tronçon cylindrique de la barre rotative (4) pour le montage rotatif de la barre rotative (4) sur la porte (1a), la trappe ou élément similaire.

4. Fermeture à barre rotative selon la revendication 3, **caractérisée en ce qu'**une bague d'écartement (24, 25) entourant coaxialement la barre rotative (4) est prévue entre la ou chaque plaque d'appui (22, 23) et le ou chaque élément de verrouillage (2, 3).

5. Fermeture à barre rotative selon la revendication 2, **caractérisée en ce que** l'élément de verrouillage (2a, 2b, 2c) supplémentaire comporte un trou débouchant et une fente (36, 36') qui s'étend entre le trou débouchant et la face extérieure de l'élément de verrouillage supplémentaire et qui est délimitée par deux tronçons (39, 39', 39", 40, 40', 40") de l'élément de verrouillage supplémentaire, qui entourent le trou débouchant et sont reliés l'un à l'autre de manière élastiquement flexible, et un tronçon de la barre rotative (4a, 4b, 4c) est logé dans le trou débouchant et est maintenu immobile en rotation par une force de serrage exercée par les deux tronçons de l'élément de verrouillage supplémentaire et générée par le serrage des deux tronçons de l'élément de verrouillage supplémentaire au moyen d'un assemblage vissé ou riveté (42, 42', 46).

6. Fermeture à barre rotative selon la revendication 5, **caractérisée en ce que** le tronçon de la barre rotative (4b, 4c), logé dans le trou débouchant de l'élément de verrouillage (2b, 2c) supplémentaire, et le trou débouchant ont des sections ovalisées qui sont ajustées entre elles, de telle sorte que le tronçon de la barre rotative (4b, 4c) est logé par conjugaison de forme dans le trou débouchant de l'élément de verrouillage (2b, 2c) supplémentaire, sachant que des parties de paroi, en appui l'une contre l'autre, du trou débouchant et du tronçon de la barre rotative logé dans ce dernier, sont poussées l'une contre l'autre par l'assemblage vissé ou riveté (42, 46).

7. Fermeture à barre rotative selon la revendication 6, **caractérisée en ce que** la section du trou débouchant et la section du tronçon de la barre rotative, logé dans ce dernier, ont chacune une forme polygonale.

8. Fermeture à barre rotative selon la revendication 7, **caractérisée en ce que** la section du trou débouchant et la section du tronçon de la barre rotative, logé dans ce dernier, ont chacune une forme rectangulaire.

9. Fermeture à barre rotative selon la revendication 5, **caractérisée en ce que** le tronçon de la barre rotative (4a), logé dans le trou débouchant de l'élément de verrouillage (2a) supplémentaire, et le trou débouchant ont des sections circulaires qui sont ajustées entre elles de telle sorte que, lorsque les deux tronçons (39, 40) de l'élément de verrouillage (2a) supplémentaire sont serrés l'un à l'autre, la paroi du trou débouchant est en appui par friction contre le tronçon de la barre rotative (4a), logé dans le trou débouchant.

10. Fermeture à barre rotative selon l'une quelconque des revendications 5 à 9, **caractérisée en ce que** l'assemblage vissé ou riveté comporte au moins une vis (42, 42', 46) ou un rivet, dont la tige s'étend à travers un évidement (43, 43', 43") dans la surface du tronçon de la barre rotative (4a, 4b, 4c), logé dans le trou débouchant de l'élément de verrouillage (2a, 2b, 2c) supplémentaire, de telle sorte que, sous l'effet de l'appui de l'assemblage vissé ou riveté contre la paroi de l'évidement (43, 43', 43"), l'élément de verrouillage supplémentaire et la barre rotative (4a, 4b, 4c) sont immobiles l'un par rapport à l'autre dans leur direction longitudinale.

11. Fermeture à barre rotative selon la revendication 2, **caractérisée en ce que** l'assemblage solidaire en rotation entre la barre rotative et l'élément de verrouillage (2d) supplémentaire est formé par un assemblage enfiché qui est constitué de deux éléments d'assemblage (49), ayant chacun une section ovalisée et enfichés l'un dans l'autre, de l'élément de verrouillage (2d) supplémentaire et de la barre rotative.

12. Fermeture à barre rotative selon la revendication 11, **caractérisée en ce que** l'élément d'assemblage par enfichage de l'élément de verrouillage (2d) supplémentaire est un tenon d'assemblage (49), qui est en saillie sur le corps de base (12d) dudit élément de verrouillage et qui s'étend dans la direction longitudinale de la barre rotative et comporte un tronçon d'extrémité (50) avec une section ovalisée, et l'élément d'assemblage par enfichage de la barre rotative est une cavité, munie d'une extrémité ouverte et réalisée dans un tronçon d'extrémité de la barre rotative, ladite cavité ayant une section correspondant à la section ovalisée du tronçon d'extrémité du tenon d'assemblage (49), et le tronçon d'extrémité du tenon d'assemblage (49) recevant de manière immobile en rotation l'élément de verrouillage (2d) supplémentaire.

13. Fermeture à barre rotative selon la revendication 12, **caractérisée en ce que** la barre rotative est un tube avec une section de forme polygonale au moins à l'intérieur, le tronçon d'extrémité (50) du tenon d'assemblage (49) a une section de forme polygonale au moins à l'extérieur avec un nombre d'arêtes correspondant au nombre d'arêtes de la section de la barre rotative, et une extrémité de la barre rotative est emboutie par retournement sur le tronçon d'extrémité (50) du tenon d'assemblage (49).

14. Fermeture à barre rotative selon la revendication 13, **caractérisée en ce que** la barre rotative est un tube rectangulaire et le tenon d'assemblage (49) est un tenon plein et comporte un tronçon d'extrémité (50) polygonal.

15. Fermeture à barre rotative selon l'une quelconque des revendications 11 à 14, **caractérisée en ce qu'**il est prévu une plaque d'appui (22'), qui peut être fixée contre la porte, la trappe ou élément similaire et qui comporte une fenêtre (54) ronde à travers laquelle passe un tronçon d'appui (55) cylindrique du tenon d'assemblage (49) de l'élément de verrouillage (2d) supplémentaire pour le montage rotatif de l'élément de verrouillage (2d) supplémentaire sur la porte, la trappe ou élément similaire.

16. Fermeture à barre rotative selon la revendication 15, **caractérisée en ce que** dans un creux (53), muni de la fenêtre (54), dans la plaque d'appui (22') sont disposées de manière immobile en rotation deux plaques de retenue (52) qui ont chacune une surface de butée, interrompue par un évidement semi-circulaire, et qui viennent buter l'une contre l'autre au niveau de leur surface de butée, les évidements semi-circulaires se complétant pour former un trou rond, dans lequel est logé de manière rotative un tronçon d'appui (51) cylindrique supplémentaire du tenon d'assemblage (49), sachant que le tronçon d'appui (51) cylindrique supplémentaire, traversant le trou formé conjointement par les plaques de retenue (52), du tenon d'assemblage (49) a un diamètre inférieur à celui du tronçon d'appui (55) cylindrique du tenon d'assemblage (49), lequel traverse la fenêtre (54) de la plaque d'appui (22').

17. Fermeture à barre rotative selon la revendication 16, **caractérisée en ce que** le tronçon d'appui (51) cylindrique supplémentaire du tenon d'assemblage (22') est agencé entre le tronçon d'extrémité (50) à section ovalisée du tenon d'assemblage (49) et le tronçon d'appui cylindrique (55) avec un plus grand diamètre du tenon d'assemblage (49), et le tronçon d'appui (55) cylindrique avec le plus grand diamètre est relié, par l'intermédiaire d'un tronçon de base (56), d'un seul tenant avec le corps de base (12d) de l'élément de verrouillage (22') supplémentaire.

18. Fermeture à barre rotative selon la revendication 17, **caractérisée en ce que** la fenêtre (54) dans la plaque d'appui (22') a un diamètre supérieur à la plus grande épaisseur du tronçon d'extrémité (50) du tenon d'assemblage (49).

19. Fermeture à barre rotative selon l'une quelconque des revendications précédentes, **caractérisée en ce que** le contre-support (6) de l'élément de verrouillage (3), réalisé d'un seul tenant avec le levier pivotant (8), comporte une partie de boîtier (35) qui comporte un creux dans lequel le levier pivotant (8), au moins dans la position de fermeture, est logé au moins partiellement.

20. Fermeture à barre rotative selon l'une quelconque des revendications précédentes, **caractérisée en ce que** la barre rotative est un tube.
